# EUROPEAN PATENT SPECIFICATION

(11) **EP 4 283 034 B1**
(45) Date of publication and mention of the grant of the patent: **16.07.2025**
(21) Application number: 21920438.5
(22) Date of filing: 10.03.2021
(51) Int. Cl.: D06F 33/42, D06F 23/02, D06F 34/00, D06F 39/08, D06F 103/18, D06F 105/08, D06F 105/28, D06F 25/00

(54) **LAUNDRY TREATMENT APPARATUS, CONTROL METHOD THEREFOR, AND STORAGE MEDIUM**
WÄSCHEBEHANDLUNGSVORRICHTUNG, STEUERUNGSVERFAHREN DAFÜR UND SPEICHERMEDIUM
APPAREIL DE TRAITEMENT DE LINGE, SON PROCÉDÉ DE COMMANDE ET SUPPORT DE STOCKAGE

(30) Priority: 22.01.2021 CN 202110086706
(43) Date of publication of application: 29.11.2023
(73) Proprietor: Wuxi Little Swan Electric Co., Ltd., Wuxi, Jiangsu 214028 (CN)
(72) Inventor: XUE, Erpeng, Wuxi, Jiangsu 214028 (CN); JIANG, Li, Wuxi, Jiangsu 214028 (CN); ZHOU, Wei, Wuxi, Jiangsu 214028 (CN); WANG, Jia, Wuxi, Jiangsu 214028 (CN); YANG, Weiguo, Wuxi, Jiangsu 214028 (CN); KANG, Fei, Wuxi, Jiangsu 214028 (CN); TONG, Shuai, Wuxi, Jiangsu 214028 (CN)
(74) Representative: Whitlock, Holly Elizabeth Ann
(86) International application number: PCT/CN2021/080056
(87) International publication number: WO 2022/156049

(56) References cited:
- WO-A1-2019/235818
- CN-A- 104 862 927
- CN-A- 106 381 631
- CN-A- 108 978 134
- CN-A- 110 144 697
- CN-A- 112 011 968
- CN-A- 112 095 300
- CN-U- 209 178 674
- DE-A1- 102018 122 462
- JP-A- H10 179 981
- US-A1- 2008 034 809

## Description

### TECHNICAL FIELD

The invention relates to the field of laundry treatment, and in particular to a laundry treatment apparatus, a method for controlling a laundry treatment apparatus and a storage medium.

### BACKGROUND

In the related art, an inner drum and an outer tub of a laundry treatment apparatus (such as a washing machine) are in communication with each other. The inner drum is configured to hold laundry, and the outer tub is configured to hold water. The inner drum is provided with a large number of holes for the passage of water, and the inner drum is in communication with the outer tub through the holes. The water in the outer tub enters into the inner drum, and the water is injected and drained through the outer tub. In the laundry treatment apparatus, dirt and bacteria are easily accumulated between the inner drum and the outer tub and it is not easy to clean the dirt and the bacteria between the inner drum and the outer tub. Based on this, in the related art, there is a laundry treatment apparatus with single tub washing that is different from existing washing methods. An inner drum is a hole-less inner drum and is isolated from an outer tub. The inner drum is configured to hold the laundry, beat or stir the laundry, and hold the water. However, in the laundry treatment apparatus with the single tub washing, there is still a risk that the water between the inner drum and the outer tub affects the washing effect. DE102018122462A1 relates generally to a method for operating a cleaning device (100) which has a suds container (110) and a drum (115). WO2019235818A1 relates generally to a method of controlling a washing machine in which a tub is rotated about a horizontal axis. US2008034809A1 relates generally to a washing machine and a water level control method thereof that can supply an appropriate amount of water based on the amount of laundry.

### SUMMARY

The invention is defined by the independent claims 1, 7 and 10. Advantageous embodiments of the invention are defined by the dependent claims.

According to the technical solution of the embodiments of the application, a laundry treatment apparatus is provided with a water level detecting device configured to detect a water level in a water storage cavity. A control device is configured to acquire the water level detected by the water level detecting device, and control a drain pump to be activated according to the detected water level, to allow water in the water storage cavity to be discharged in time when the water level in the water storage cavity is high, to prevent the water overflowing into the water storage cavity from flowing back into an inner drum. In this way, water polluted by bacteria or dirt between the inner drum and an outer tub is effectively prevented from flowing back into the inner drum, which affects the washing of laundry, and it is beneficial to improve the laundry washing effect of a laundry treatment apparatus with single tub washing.

### BRIEF DESCRIPTION OF THE DRAWINGS

FIG. 1 is a schematic diagram of a laundry treatment apparatus according to an embodiment of the application.
FIG. 2 is a schematic diagram of a laundry treatment apparatus according to another embodiment of the application.
FIG. 3 is a schematic diagram of a three-way member according to an embodiment of the application.
FIG. 4 is a schematic cross-sectional diagram of a three-way member according to an embodiment of the application.
FIG. 5 is a schematic enlarged partial diagram of a portion D of FIG. 4.
FIG. 6 is a schematic flowchart of a method for controlling a laundry treatment apparatus according to an embodiment of the application.
FIG. 7 is a schematic flowchart of a method for controlling a laundry treatment apparatus according to an exemplary embodiment of the application.

### List of reference symbols:

1. outer tub; 11. door; 2, inner drum; 21. open end;
3. water storage cavity; 4. drain pipe; 5. drain pump;
6. water level detecting device; 61. air chamber; 62. water level sensor;
7. heating member;
8. three-way member; 81. body; 82. first port; 83. second port; 84. third port;
85. lid; 851. vent hole; 86. check valve; 861, first sheet; 862, second sheet.

### DETAILED DESCRIPTION

The application will be further described in detail below in combination with the drawings and the embodiments.

Unless defined otherwise, all technical and scientific terms used herein have the same meaning as commonly understood by one of ordinary skill in the art to which the application belongs. The terms used herein are only for the purpose of describing the specific embodiments and are not intended to limit the application.

In the related art, a laundry treatment apparatus with single tub washing adopts a hole-less inner drum, and the inner drum is isolated from an outer tub. Since water held in the inner drum gradually overflows into the outer tub in the washing process, a water level of water between the outer tub and the inner drum gradually rises in the washing process. If the water level rises to a water level at which water overflows from the inner drum, there is a risk that the water between the outer tub and the inner drum flows back into the inner drum. Since dirt and bacteria are easily accumulated between the outer tub and the inner drum and it is not easy to clean the dirt and the bacteria between the outer tub and the inner drum, the water between the outer tub and the inner drum will be polluted by the bacteria or the dirt. If the water between the outer tub and the inner drum flows back into the inner drum, it affects the laundry washing effect and makes it difficult to meet the washing requirements. However, in the related art, the above risks are not considered.

Based on this, in various embodiments of the application, a laundry treatment apparatus is provided with a water level detecting device configured to detect a water level of water between an outer tub and an inner drum (i.e., a water level of water in a water storage cavity). A control device is configured to acquire the water level detected by the water level detecting device, and control a drain pump to be activated according to the detected water level, to allow the water in the water storage cavity to be discharged in time when the water level in the water storage cavity is high, to prevent the water overflowing into the water storage cavity from flowing back into the inner drum. In this way, the water polluted by bacteria or dirt between the inner drum and the outer tub is effectively prevented from flowing back into the inner drum, which affects the washing of laundry.

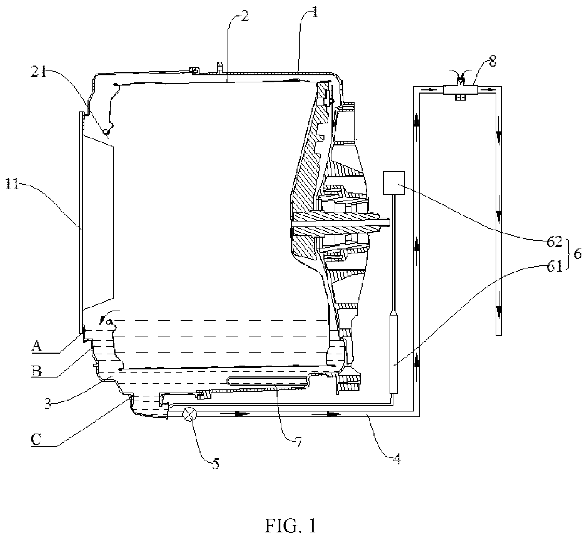

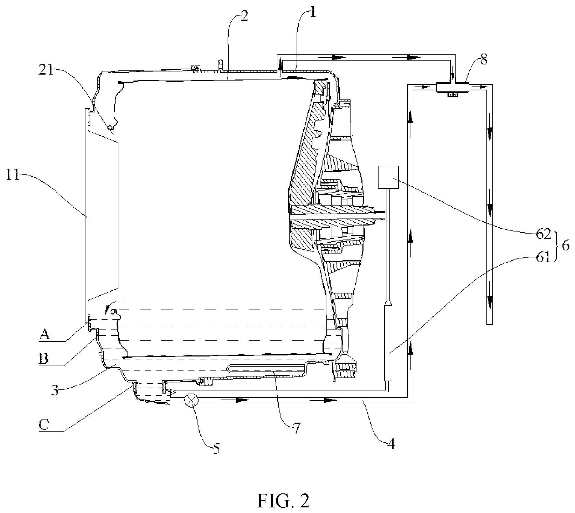

Herein, the laundry treatment apparatus may be a washing machine or a laundry washer-dryer with a drying function. As shown in FIG. 1 and FIG. 2, the laundry treatment apparatus includes an outer tub 1, an inner drum 2, a water storage cavity 3, a drain pipe 4, a drain pump 5, a water level detecting device 6 and a control device (not shown in the figures). The inner drum 2 is rotatably arranged in the outer tub 1, and the inner drum 2 may be driven to rotate by a driving device such as a motor. Herein, the inner drum 2 is configured to hold water, that is, washing water for washing laundry is held in the inner drum 2, also referred to as a hole-less inner drum, which effectively prevents the problem of accumulating dirt caused by the washing water held in the outer tub 1 in the related art.

As an example, the inner drum 2 has a rotation axis extending along a horizontal direction, and the inner drum 2 forms an open end 21 along one end of the rotation axis. The open end 21 may serve as an opening where the laundry items enter into the inner drum 2 and come out of the inner drum 2, and the washing water in the inner drum 2 may also overflow into the outer tub 1 from the open end 21. Accordingly, the outer tub 1 is provided with a door 11 at the open end 21, and the door 11 may be opened and closed. In this way, it is convenient for a user to place laundry to be washed or take out washed laundry through the door 11 and the opening of the inner drum 2.

In the practical application, a part of the washing water in the inner drum 2 overflows into the water storage cavity 3 during operation. If water in the water storage cavity 3 rises to an edge of the open end 21, there is a risk that water in the outer tub 1 flows back into the inner drum 2 to cause pollution. Based on this, the water level detecting device 6 is configured to detect a water level of the water in the water storage cavity 3. The control device is configured to determine that the detected water level reaches a set threshold (corresponding to a water level A shown in FIG. 1 and FIG. 2) according to the water level detected by the water level detecting device 6, and control the drain pump 5 to be activated, to prevent the water overflowing into the water storage cavity 3 from flowing back into the inner drum 2. In this way, water polluted by bacteria or dirt between the inner drum 2 and the outer tub 1 is effectively prevented from flowing back into the inner drum 2, which affects the washing of the laundry. The water level corresponding to the set threshold is less than a water level at which the water overflows from the inner drum 2 (which may be a water level of an overflow hole on the inner drum 2 or a water level corresponding to the edge of the open end 21), to ensure that the water in the water storage cavity 3 is prevented from flowing back into the inner drum 2.

The water storage cavity 3 is arranged on the outer tub 1. For example, the water storage cavity 3 may be formed at a bottom of the outer tub 1, that is, the bottom of the outer tub 1 is configured to store the water. An outlet of the water storage cavity 3 is in communication with the drain pipe 5. The water overflowing from the open end 21 of the inner drum 2 may flow directly into the bottom of the outer tub 1 without a special water storage tank, to simplify the structure. In other embodiments, the water storage cavity 3 may also be a chamber arranged between the outer tub 1 and the inner drum 2, which is not specifically limited in the application.

As an example, the water level detecting device 6 may be a sensing device configured to detect a change of the water level, for example, a pressure type sensing device. In an exemplary embodiment, the water level detecting device 6 includes an air chamber 61 and a water level sensor 62. One side of the air chamber 61 is in communication with the water storage cavity 3, and another side of the air chamber 61 is in communication with the water level sensor 62. A water pressure in the water storage cavity 3 transmits a pressure to the water level sensor 62 through a gas in the air chamber 61, and the water level sensor 62 may convert the pressure into a respective frequency. The control device may be configured to determine the water level in the water storage cavity 3 according to the frequency signal.

Herein, the control device may be a control main panel of the laundry treatment apparatus, and the function for controlling the water level according to the embodiments of the application is integrated on the control main panel.

As an example, the control device may be configured to periodically acquire the water level detected by the water level detecting device 6, or receive the water level periodically transmitted by the water level detecting device 6. If it is determined that the detected water level is greater than or equal to a first set water level, the drain pump 5 is controlled to be activated to control the water level in the water storage cavity 3 to be less than a reasonable water level, to prevent the water overflowing into the water storage cavity 3 from flowing back into the inner drum 2.

Herein, the drain pump 5 may be arranged at the outlet of the water storage cavity 3 or may be arranged in the drain pipe 4. The drain pump 5 may be a vane pump, a gear pump, a plunger pump and the like, which is not specifically limited in the application.

In the practical application, the control device may also be configured to determine whether the water level of the water injected into the inner drum 2 reaches a washing water level according to the detected water level, to determine whether the water level of the water injected into the inner drum 2 reaches the washing water level without affecting the injection of the water into the inner drum 2.

It can be understood that there is no water in the outer tub 1 before the water is injected into the inner drum 2. At this time, the water level detected by the water level detecting device 6 is an initial water level. In the water injection process, if the water level in the inner drum 2 reaches the washing water level, the water in the inner drum 2 may overflow into the outer tub 1 through the open end 21 or the overflow hole corresponding to the washing water level, to cause the change of the water level in the water storage cavity 3. The control device may be configured to determine whether the water level in the inner drum 2 reaches the washing water level according to a comparison between the detected water level and the initial water level. In this way, it is determined whether the water level of the water injected into the inner drum 2 reaches the washing water level by means of the water level detected by the water level detecting device 6. Therefore, the detection method is simple, the water injection process and the water injection speed for the inner drum 2 are not affected, and the water injection efficiency for the inner drum 2 is improved.

The laundry treatment apparatus further includes a heating member 7 arranged in the water storage cavity 3, a part of the inner drum 2 extends into the water storage cavity 3, and the heating member heats the inner drum 2 via the water in the water storage cavity 3, and heats the water in the inner drum 2 via the inner drum 2. Herein, the arrangement of the heating member 7 may heat the washing water, which is beneficial to improve the washing effect. In addition, the water in the water storage cavity 3 is heated, the inner drum 2 is heated via the water in the water storage cavity 3, and the washing water in the inner drum 2 is heated via the inner drum 2. During the rotation of the inner drum 2, different parts of the inner drum 2 are in contact with the heated water in the water storage cavity 3 in turn, which accelerates the heat transfer efficiency and allows the water in the inner drum 2 to be heated more evenly. The heating process for the water in the water storage cavity 3 does not affect the water injection process for the inner drum 2, and the water may enter into the inner drum 2 at a normal speed and a normal flow rate. In addition, in the subsequent washing process, the inner drum 2 has a large area of heat exchange with the water in the water storage cavity 3, which allows the laundry treatment apparatus to perform a heating operation while performing a washing operation. The heating process does not affect the washing time, which is beneficial to adjust a temperature according to the actual needs. In this way, in the washing process, the temperature is always kept in a certain temperature range, to realize the constant temperature washing. Herein, the form and structure of the heating member 7 are not specifically limited as long as the heating may be realized.

As an example, the control device may be configured to determine the water level in the water storage cavity 3 in real time or periodically according to the water level detected by the water level detecting device 6, to control the operating state of the laundry treatment apparatus. For example, the control device may store the first set water level (corresponding to the water level A shown in FIG. 1 and FIG. 2), a second set water level (corresponding to a water level B shown in FIG. 1 and FIG. 2) and a third set water level (corresponding to a water level C shown in FIG. 1 and FIG. 2) in advance. If it is determined that the water level in the water storage cavity 3 reaches the water level C, it is determined that the water level in the inner drum 2 has reached the washing water level, and the laundry treatment apparatus may be controlled to enter a washing stage to wash the laundry. If it is determined that the water level of the water storage cavity 3 reaches the water level B, it is determined that the water in the water storage cavity 3 has reached the amount of water required for heating, and it is determined whether the laundry treatment apparatus is performing a washing and heating operation according to a washing mode selected by the user. If the laundry treatment apparatus is performing the washing and heating operation, the heating member 7 is controlled to heat the water in the water storage cavity 3 according to the temperature control requirements for the washing and heating operation, to realize the washing and heating operation. If it is determined that the water level of the water storage cavity 3 reaches the water level A in the washing process, the drain pump 5 is controlled to be activated, to discharge the water in the water storage cavity 3 until the water level in the water storage cavity 3 is less than the water level A.

It can be understood that the first set water level > the second set water level > the third set water level. The first set water level can be understood as a maximum water level at which the water is allowed to be stored in the water storage cavity 3. The second set water level can be understood as a water level at which the safe amount of water required for the heating member 7 to perform heating is stored in the water storage cavity 3 and at least one part of the inner drum 2 is immersed. The third set water level can be understood as a water level at which the water injected into the inner drum 2 that is determined according to the water storage cavity 3 reaches the washing water level. As an example, the water at a drain opening of the outer tub 1 may not be emptied, and the third set water level may be higher than a height where the drain opening of the outer tub 1 is located. The water in the water storage cavity 3 needs to immerse a part of the inner drum 2, otherwise the washing water in the inner drum 2 cannot be heated via the inner drum 2. The second set water level may be higher than the lowest portion of the inner drum 2. The first set water level may be higher than the second set water level and lower than the lowest portion of the open end 21 of the inner drum 2, to prevent the water in the water storage cavity 3 from flowing back into the inner drum 2 through the open end 21.

Because the heating member 7 for the heating purpose is arranged in the water storage cavity 3, in the heating and washing process, if the water in the water storage cavity 3 is discharged and the water level in the water storage cavity 3 is less than the water level B, the operation of the heating member 7 may be affected. For example, the water that is heated in the water storage cavity 3 may not effectively transfer the heat to the inner drum 2 and the washing water in the inner drum 2, or there is a risk of dry heating of the heating member 7. Based on this, when it is determined that the laundry treatment apparatus needs to perform a washing and heating operation, a work duration of the drain pump 5 needs to be reasonably controlled. In this way, after the drain pump 5 discharges the water, the remaining water level in the water storage cavity 3 is lower than the water level A and higher than the water level B, to retain in the water storage cavity 3 the reasonable amount of water required for the heating member 7 to operate, in which the reasonable amount of water also needs to ensure that a part of the inner drum 2 is immersed in the water. Herein, this may be realized by controlling the work duration of the drain pump 5 after being activated. For example, the drain pump 5 is controlled to be activated and to work for a set duration, to allow the water level in the water storage cavity 3 to be less than the first set water level and greater than or equal to the second set water level. The set duration may be reasonably determined according to tests.

In a practical application, in order to prevent the drain pipe 4 from discharging the water in the water storage cavity 3 due to the siphon phenomenon after the drain pump 5 stops working, the laundry treatment apparatus further includes a three-way member 8 arranged on the drain pipe 4. The three-way member 8 includes a first port 82, a second port 83 and a third port 84. Each of the first port 82 and the second port 83 is connected to a respective one of interfaces of the drain pipe 4 to connect the three-way member 8 to the drain pipe 4. The third port 84 is in communication with a chamber of the outer tub 1 or external atmospheric pressure, and is configured to eliminate an air pressure difference of the drain pipe 4 at the three-way member 8. In this way, the water in the water storage cavity 3 may be effectively prevented from being emptied due to the siphon phenomenon, thus preventing the difficulty in meeting the amount of water required for the heating member 7 to perform heating.

As an example, the three-way member 8 may be arranged at a highest portion of the drain pipe 4, to block the siphon phenomenon at the highest portion of the drain pipe 4 and prevent the water in the water storage cavity 3 from being additionally discharged after the drain pump 5 stops working.

As shown in FIG. 1, in an exemplary embodiment, the third port 84 of the three-way member 8 is in direct communication with the external atmospheric pressure, and is configured to eliminate the air pressure difference of the drain pipe 4 at the three-way member 8.

As shown in FIG. 2, in an exemplary embodiment, the third port 84 of the three-way member 8 is in communication with a chamber of the outer tub 1 through a pipe, and is configured to eliminate the air pressure difference of the drain pipe 4 at the three-way member 8.

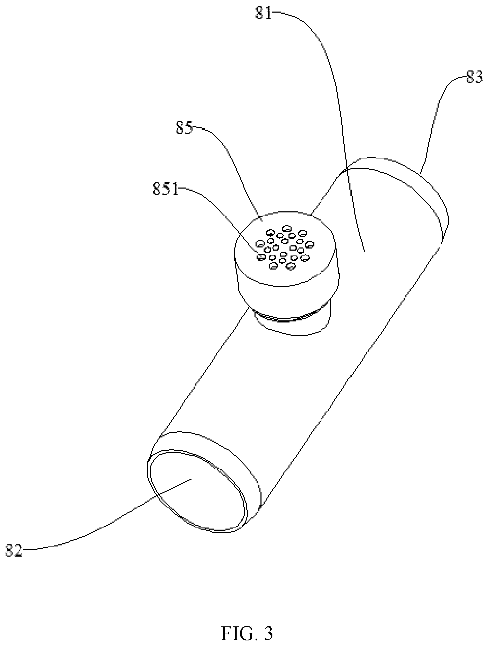

As shown in FIG. 3, in some embodiments, the three-way member 8 includes a tubular body 81 and a lid 85. One end of the tubular body 81 forms the first port 82, another end of the tubular body 81 forms the second port 83, and a middle part of the tubular body 81 protrudes to form the third port 84. The lid 85 is capped on the third port 84 and is provided with a plurality of vent holes 851.

As an example, if the third port 84 of the three-way member 8 is in direct communication with the external atmospheric pressure, in order to prevent water in the drain pipe 4 from overflowing outside the third port 84, the three-way member 8 further includes a check valve 86 arranged at the third port 84. The check valve 86 is configured to allow air to enter into the drain pipe 4 unidirectionally, and prevent the water in the drain pipe 4 from overflowing therefrom.

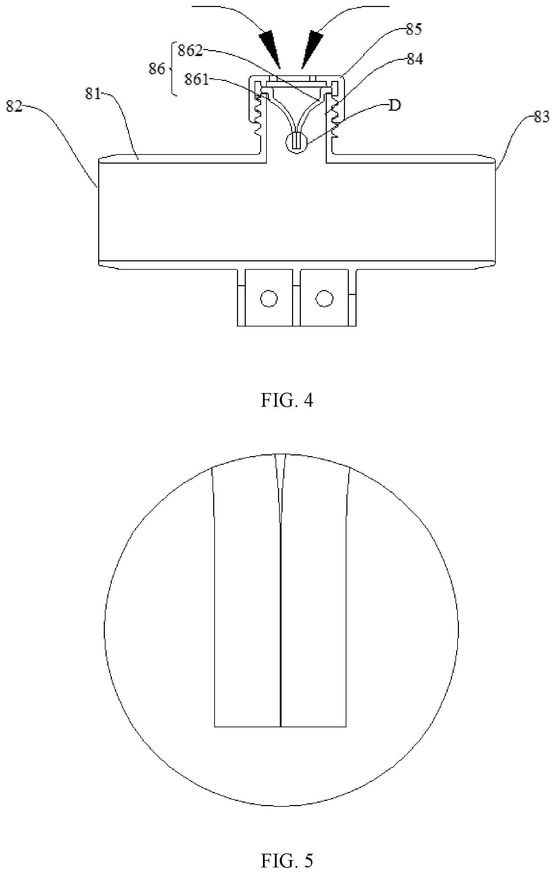

As shown in FIG. 4 and FIG. 5, the check valve 86 includes a first sheet 861 and a second sheet 862 clamped between the lid 85 and the third port 84, a clamped end of the first sheet 861 and a clamped end of the second sheet 862 are spaced apart from each other and are arranged opposite to each other, and a free end of the first sheet 861 and a free end of the second sheet 862 extend close to each other along a direction away from the lid 85 and abut against each other. Herein, each of the first sheet 861 and the second sheet 862 may be in the form of a thin sheet, and the clamped end of the first sheet 861 and the clamped end of the second sheet 862 are clamped and fixed between the lid 85 and the third port 84 by the lid 85. Herein, an outer periphery of the third port 84 may be provided with a threaded opening, and an inner wall surface of the lid 85 may be fitted and fixedly connected with the threaded opening to clamp the first sheet 861 and the second sheet 862. The free end of the first sheet 861 and the free end of the second sheet 862 abut against each other to form the check valve 86 with a duckbill structure. The check valve 86 is configured to allow the air originating from an exterior to enter into the drain pipe 4, and prevent the water in the drain pipe 4 from overflowing outside the third port 84. In this way, the water in the drain pipe 4 may be prevented from overflowing from the third port 84, which is beneficial to protect the surrounding environment at the three-way member 8.

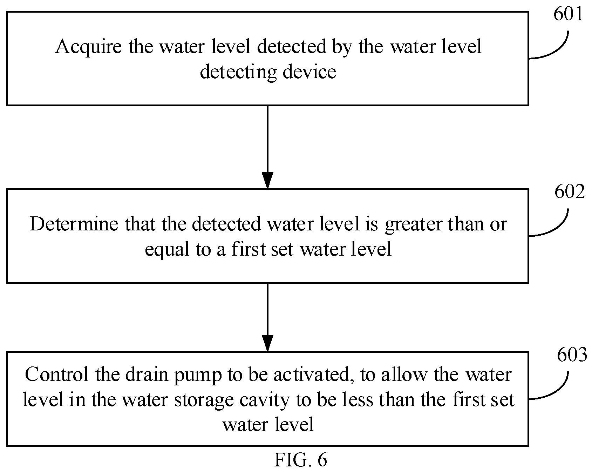

An embodiment of the application also provides a method for controlling a laundry treatment apparatus as shown in FIG. 6, which is applied to the laundry treatment apparatus according to the previous embodiments. The method includes the following operations.

In operation 601, the water level detected by the water level detecting device is acquired.

Herein, the control device of the laundry treatment apparatus is configured to acquire the water level detected by the water level detecting device 6, to determine whether there is a risk that the water level in the water storage cavity 3 flows back into the inner drum 2.

In operation 602, it is determined that the detected water level is greater than or equal to a first set water level.

Herein, the control device is configured to compare the detected water level and the first set water level. The first set water level can be understood as a maximum water level at which the water is allowed to be stored in the water storage cavity 3, and is less than a water level at which the water overflows from the inner drum 2. If it is determined that the detected water level is greater than or equal to the first set water level, the operation 603 is performed, to allow the water in the water storage cavity 3 to be discharged.

In operation 603, the drain pump is controlled to be activated, to allow the water level in the water storage cavity to be less than the first set water level.

Herein, the control device is configured to control the drain pump 5 to be activated and to work, to allow the excess water in the water storage cavity 3 to be discharged, and to allow the water level in the water storage cavity 3 to be less than the first set water level, which eliminates a risk that the water in the water storage cavity 3 flows back into the inner drum 2.

As an example, the method for controlling the laundry treatment apparatus further includes the following operations.

It is determined that the laundry treatment apparatus needs to perform a washing and heating operation.

The drain pump is controlled to work for a set duration, to allow the water level in the water storage cavity to be less than the first set water level and greater than or equal to a second set water level.

Herein, the second set water level is less than the first set water level, and is configured to retain, in the water storage cavity, amount of water required for the heating member to operate, and allow a part of the inner drum to be immersed in the water.

Herein, the laundry treatment apparatus may be configured to determine whether the laundry treatment apparatus needs to perform the washing and heating operation according to an instruction selected by the user. For example, the laundry treatment apparatus may separately provide a heating function, and the user may select whether to turn on the heating function. Alternatively, the washing mode has an option of whether to turn on the washing and heating operation, and it can be determined whether the washing and heating operation needs to be performed in the washing process according to the washing mode selected by the user. In this way, the laundry treatment apparatus may be configured to determine whether the washing and heating operation needs to be performed in the washing process according to the instruction of the user. If the washing and heating operation needs to be performed in the current washing process, the drain pump is controlled to work for the set duration. Herein, the set duration may be reasonably determined according to tests. The control device is configured to control the drain pump 5 to be activated and to work for the set duration, to allow the remaining water level in the water storage cavity to be less than the first set water level and greater than or equal to the second set water level, and to allow the reasonable amount of water required for the heating member 7 to operate to be retained in the water storage cavity. It can be understand that when the laundry treatment apparatus automatically determines a risk that the water in the water storage cavity 3 flows back into the inner drum 2 in the washing process, a part of the amount of water is discharged in time, and the reasonable amount of water required for performing the washing and heating operation is retained. In this way, the requirements for the amount of water required for performing the washing and heating operation is met, and the influence of the polluted water on the laundry caused by the water in the water storage cavity flowing back into the inner drum in the washing process is effectively prevented.

As an example, the method for controlling the laundry treatment apparatus further includes the following operations.

It is determined that the detected water level is greater than or equal to the second set water level, and the heating member is controlled to heat the water in the water storage cavity according to a set temperature.

Herein, for the washing and heating operation, the laundry treatment apparatus is configured to control the heating member to heat the water in the water storage cavity according to a set temperature only when it is determined that the detected water level is greater than or equal to the second set water level in the washing process, to realize the washing and heating operation in the washing process. The set temperature may be reasonably adjusted based on the selection of the user, or a temperature range default corresponding to the washing mode, which is not specifically limited in the application.

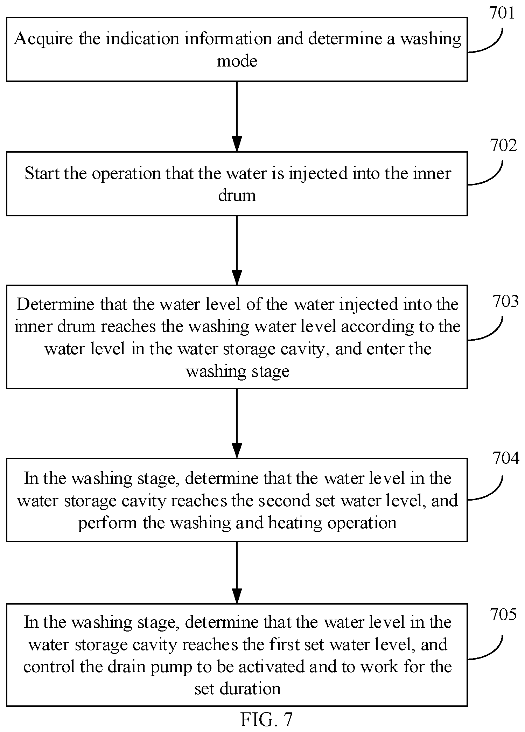

FIG. 7 shows a schematic flowchart of a method for controlling a laundry treatment apparatus according to an exemplary embodiment of the application. In the exemplary embodiment, a control device of the laundry treatment apparatus stores a first set water level, a second set water level and a third set water level in advance. Herein, the first set water level can be understood as a maximum water level at which the water is allowed to be stored in the water storage cavity. The second set water level can be understood as a water level at which the safe amount of water required for the heating member to perform heating is stored in the water storage cavity. The third set water level can be understood as a water level at which the water injected into the inner drum that is determined according to the water storage cavity reaches the washing water level. The method for controlling the laundry treatment apparatus specifically includes the following operations.

In operation 701, indication information is acquired and a washing mode is determined.

Herein, the user may input the instruction information for selecting the washing mode according to a touch screen or a key and the like. The laundry treatment apparatus is configured to determine the washing mode according to the input instruction information, for example, determine parameters such as a washing duration, a washing water level, and whether to turn on the heating and washing function. The exemplary embodiment is illustrated as an example of turning on the heating and washing function.

In operation 702, the operation that the water is injected into the inner drum is started.

After the laundry treatment apparatus determines the parameters of the washing mode, the operation that the water is injected into the inner drum is started. For example, a water inlet valve is opened, to allow the water in a water inlet pipe to be guided to the inner drum, to soak laundry to be washed in the inner drum.

In operation 703, it is determined that the water level of the water injected into the inner drum reaches the washing water level according to the water level in the water storage cavity, and a washing stage is entered.

When the control device of the laundry treatment apparatus acquires the water level in the water storage cavity detected by the water level detecting device, and determines that the detected water level is greater than or equal to the third set water level, the control device of the laundry treatment apparatus determines that the water level of the water injected into the inner drum reaches the washing water level, and controls the washing procedure to enter the washing stage, for example, control the inner drum to rotate and start the washing.

In operation 704, in the washing stage, it is determined that the water level in the water storage cavity reaches the second set water level, and the washing and heating operation is performed.

When the control device of the laundry treatment apparatus determines that the detected water level is greater than or equal to the second set water level according to the water level detected by the water level detecting device, the control device of the laundry treatment apparatus determines that the amount of water in the water storage cavity reaches the safe amount of water required for the heating member to perform heating. At this time, the heating member is controlled to heat the water in the water storage cavity according to the temperature control requirements, to allow the water in the water storage cavity to be in a reasonable temperature range. During the rotation of the inner drum, different parts of the inner drum are in contact with the heated water in the water storage cavity in turn, which accelerates the heat transfer efficiency, allows the water in the inner drum to be heated more evenly, and realizes the effect of the constant temperature washing.

In operation 705, in the washing stage, it is determined that the water level in the water storage cavity reaches the first set water level, and the drain pump is controlled to be activated and to work for the set duration.

When the control device of the laundry treatment apparatus determines that the detected water level is greater than or equal to the first set water level according to the water level detected by the water level detecting device, the control device of the laundry treatment apparatus determines that the water level in the water storage cavity is greater than a set maximum water level and controls the drain pump to be activated and to work for the set duration, to allow the water level in the water storage cavity to be less than the first set water level and greater than or equal to the second set water level. In this way, the requirements for the amount of water required for performing the washing and heating operation is met, and the influence of the polluted water on the laundry caused by the water in the water storage cavity flowing back into the inner drum in the washing process is effectively prevented. It can be understood that during the whole washing stage, the control device may periodically determine whether the detected water level is greater than or equal to the first set water level. If the detected water level is less than the first set water level, the laundry treatment apparatus is controlled to operate normally. If the detected water level is greater than or equal to the first set water level, the control device controls the drain pump to be activated and to work for the set duration. Until the end of the washing stage, for example, when the washing duration reaches a set washing duration, the control device controls the drain pump to be activated, to allow the water in the inner barrel and the outer tub to be discharged.

In an exemplary embodiment, an embodiment of the application further provides a storage medium, that is, a computer storage medium, which can be specifically a computer readable storage medium, such as a memory for storing computer programs which can be executed by a processor of the laundry treatment apparatus to complete the operations described in the method of the embodiment of the application. The computer readable storage medium can be a Read-Only Memory (ROM), a Programmable Read-Only Memory (PROM), an Erasable Programmable Read-Only Memory (EPROM), an Electrically Erasable Programmable Read-Only Memory (EEPROM), a Flash Memory, a magnetic surface memory, an optical disk, a Compact Disc Read-Only Memory (CD-ROM) or the like.

It should be noted that the terms "first", "second" and the like are used for distinguishing similar objects, and not necessarily for describing a specific sequential or chronological order.

In addition, the technical solutions described in the embodiments of the application may be combined with each other without conflict.

## Claims

1. A laundry treatment apparatus, comprising:
an outer tub (1);
a hole-less inner drum (2) rotatably arranged in the outer tub (1) and configured to hold water;
a water storage cavity (3) arranged on the outer tub (1) and configured to store water overflowing from the inner drum (2);
a drain pipe (4) in communication with the water storage cavity (3);
a drain pump (5) configured to discharge the water in the water storage cavity (3) through the drain pipe (4);
a heating member (7) arranged in the water storage cavity (3), wherein a part of the inner drum (2) extends into the water storage cavity (3), and the heating member (7) is configured to heat the inner drum (2) via the water in the water storage cavity (3), and wherein the heating member (7) is configured to heat the water in the inner drum (2) via the inner drum (2);
a water level detecting device (6) configured to detect a water level in the water storage cavity (3); and
a control device connected to the drain pump (5) and the water level detecting device (6), wherein the control device is configured to acquire the water level detected by the water level detecting device (6), and control the drain pump (5) to be activated according to the detected water level, to prevent the water overflowing into the water storage cavity (3) from flowing back into the inner drum (2); and **characterized by**: a three-way member (8) arranged on the drain pipe (4), wherein the three-way member (8) comprises: a first port (82) and a second port (83), wherein each of the first port (82) and the second port (83) is connected to a respective one of interfaces of the drain pipe (4) to connect the three-way member (8) to the drain pipe (4); and
a third port (84) in communication with a chamber of the outer tub (1) or external atmospheric pressure and configured to eliminate an air pressure difference of the drain pipe (4) at the three-way member (8).

2. The laundry treatment apparatus according to claim 1, wherein the three-way member (8) further comprises:
a check valve (86) arranged at the third port (84), wherein the check valve (86) is configured to allow air to enter into the drain pipe (4) unidirectionally, and prevent water in the drain pipe (4) from overflowing therefrom.

3. The laundry treatment apparatus according to claim 2, wherein the three-way member (8) comprises:
a tubular body, wherein one end of the tubular body forms the first port (82), another end of the tubular body forms the second port (83), and a middle part of the tubular body protrudes to form the third port (84); and
a lid (85) capped on the third port (84) and provided with a plurality of vent holes (851),
wherein the check valve (86) comprises a first sheet (861) and a second sheet (862) clamped between the lid (85) and the third port (84), a clamped end of the first sheet (861) and a clamped end of the second sheet (862) are spaced apart from each other and are arranged opposite to each other, and a free end of the first sheet (861) and a free end of the second sheet (862) extend close to each other along a direction away from the lid (85) and abut against each other.

4. The laundry treatment apparatus according to claim 1, wherein the three-way member (8) is located at a highest portion of the drain pipe (4).

5. The laundry treatment apparatus according to claim 1, wherein
the water storage cavity (3) is formed at a bottom of the outer tub (1).

6. The laundry treatment apparatus according to claim 1, wherein
the inner drum (2) has a rotation axis extending along a horizontal direction, and the inner drum (2) forms an open end (21) along one end of the rotation axis.

7. A method for controlling a laundry treatment apparatus, applied to the laundry treatment apparatus according to any one of claims 1 to 6, comprising:
acquiring (601) the water level detected by the water level detecting device (6);
determining (602) that the detected water level is greater than or equal to a first set water level; and
controlling (603) the drain pump (5) to be activated, to allow the water level in the water storage cavity (3) to be less than the first set water level,
wherein the first set water level is less than a water level at which the water overflows from the inner drum (2).

8. The method according to claim 7, further comprising:
determining that the laundry treatment apparatus needs to perform a washing and heating operation; and
controlling the drain pump (5) to work for a set duration, to allow the water level in the water storage cavity (3) to be less than the first set water level and greater than or equal to a second set water level,
wherein the second set water level is less than the first set water level, and is configured to retain, in the water storage cavity (3), an amount of water required for the heating member (7) to operate, and allow a part of the inner drum (2) to be immersed in the water.

9. The method according to claim 8, further comprising:
determining that the detected water level is greater than or equal to the second set water level, and controlling the heating member (7) to heat the water in the water storage cavity (3) according to a set temperature.

10. A storage medium having stored thereon a computer program comprising instructions to cause the laundry treatment apparatus according to any one of claims 1-6 to carry out the method according to any one of claims 7 to 9.

## Patentansprüche

1. Wäschebehandlungsgerät, das Folgendes umfasst:
einen Laugenbehälter (1),
eine Innentrommel (2) ohne Löcher, die drehbar in dem Laugenbehälter (1) angeordnet und so ausgelegt ist, dass sie Wasser aufnehmen kann,
einen Wasserspeicherhohlraum (3), der an dem Laugenbehälter (1) angeordnet und so ausgelegt ist, dass er Wasser speichern kann, das aus der Innentrommel (2) überläuft,
ein Abflussrohr (4), das mit dem Wasserspeicherhohlraum (3) verbunden ist,
eine Laugenpumpe (5), die so ausgelegt ist, dass sie das Wasser im Wasserspeicherhohlraum (3) über das Abflussrohr (4) ableitet,
ein Heizelement (7), das in dem Wasserspeicherhohlraum (3) angeordnet ist, wobei ein Teil der Innentrommel (2) in den Wasserspeicherhohlraum (3) hinein verläuft und das Heizelement (7) so ausgelegt ist, dass es die Innentrommel (2) über das Wasser im Wasserspeicherhohlraum (3) erhitzt, und wobei das Heizelement (7) so ausgelegt ist, dass es das Wasser in der Innentrommel (2) über die Innentrommel (2) erhitzt,
eine Wasserstanderfassungsvorrichtung (6), die so ausgelegt ist, dass sie einen Wasserstand im Wasserspeicherhohlraum (3) erfasst, und
eine Steuervorrichtung, die mit der Laugenpumpe (5) und der Wasserstanderfassungsvorrichtung (6) verbunden ist, wobei die Steuervorrichtung so ausgelegt ist, dass sie den von der Wasserstanderfassungsvorrichtung (6) erfassten Wasserstand abruft und die Laugenpumpe (5) dem erfassten Wasserstand entsprechend einschaltet, um zu verhindern, dass das Wasser, das in den Wasserspeicherhohlraum (3) überläuft, in die Innentrommel (2) zurückläuft, und **gekennzeichnet durch**: ein Dreiwegeelement (8), das an dem Abflussrohr (4) angeordnet ist, wobei das Dreiwegeelement (8) Folgendes umfasst: einen ersten Anschluss (82) und einen zweiten Anschluss (83), wobei sowohl der erste Anschluss (82) als auch der zweite Anschluss (83) mit einer jeweiligen Anschlussstelle des Abflussrohrs (4) und das Dreiwegeelement (8) so mit dem Abflussrohr (4) verbunden ist, und
einen dritten Anschluss (84), der mit einer Kammer des Laugenbehälters (1) oder mit dem Außenluftdruck verbunden und so ausgelegt ist, dass er eine Luftdruckdifferenz des Abflussrohrs (4) an dem Dreiwegeelement (8) eliminiert.

2. Wäschebehandlungsgerät nach Anspruch 1, wobei das Dreiwegeelement (8) ferner Folgendes umfasst:
ein Rückschlagventil (86), das an dem dritten Anschluss (84) angeordnet ist, wobei das Rückschlagventil (86) so ausgelegt ist, dass es Luft in einer Richtung in das Abflussrohr (4) hineinlässt und verhindert, dass Wasser aus dem Abflussrohr (4) überläuft.

3. Wäschebehandlungsgerät nach Anspruch 2, wobei das Dreiwegeelement (8) Folgendes umfasst:
einen rohrförmigen Hauptteil, wobei ein Ende des rohrförmigen Hauptteils den ersten Anschluss (82) bildet, ein anderes Ende des rohrförmigen Hauptteils den zweiten Anschluss (83) bildet und ein mittlerer Teil des rohrförmigen Hauptteils vorsteht und so den dritten Anschluss (84) bildet, und
eine Kappe (85), die den dritten Anschluss (84) abdeckt und mit mehreren Lüftungslöchern (851) versehen ist,
wobei das Rückschlagventil (86) ein erstes Blech (861) und ein zweites Blech (862) umfasst, die zwischen der Kappe (85) und dem dritten Anschluss (84) festgeklemmt sind, wobei ein festgeklemmtes Ende des ersten Blechs (861) und ein festgeklemmtes Ende des zweiten Blechs (862) voneinander beabstandet und einander gegenüber angeordnet sind und ein freies Ende des ersten Blechs (861) und ein freies Ende des zweiten Blechs (862) nahe beieinander in einer Richtung von der Kappe (85) weg verlaufen und aneinander anliegen.

4. Wäschebehandlungsgerät nach Anspruch 1, wobei sich das Dreiwegeelement (8) an einem höchsten Abschnitt des Abflussrohrs (4) befindet.

5. Wäschebehandlungsgerät nach Anspruch 1, wobei
der Wasserspeicherhohlraum (3) am Boden des Laugenbehälters (1) ausgebildet ist.

6. Wäschebehandlungsgerät nach Anspruch 1, wobei
die Innentrommel (2) eine Rotationsachse aufweist, die in horizontaler Richtung verläuft, und die Innentrommel (2) an einem Ende der Rotationsachse ein offenes Ende (21) bildet.

7. Verfahren zum Steuern eines Wäschebehandlungsgeräts, das bei dem Wäschebehandlungsgerät nach einem der Ansprüche 1 bis 6 angewendet wird und Folgendes umfasst:
Abrufen (601) des von der Wasserstanderfassungsvorrichtung (6) erfassten Wasserstands,
Ermitteln (602), dass der erfasste Wasserstand mindestens einem ersten festgelegten Wasserstand entspricht, und
Einschalten (603) der Laugenpumpe (5), damit der Wasserstand in dem Wasserspeicherhohlraum (3) unter dem ersten festgelegten Wasserstand bleibt,
wobei der erste festgelegte Wasserstand unter einem Wasserstand liegt, bei dem das Wasser aus der Innentrommel (2) überläuft.

8. Verfahren nach Anspruch 7, das ferner Folgendes umfasst:
Ermitteln, dass das Wäschebehandlungsgerät einen Wasch- und Heizvorgang durchführen muss, und
derartiges Ansteuern der Laugenpumpe (5), dass sie für eine festgelegte Dauer arbeitet, damit der Wasserstand in dem Wasserspeicherhohlraum (3) unter dem ersten festgelegten Wasserstand bleibt und mindestens einem zweiten festgelegten Wasserstand entspricht,
wobei der zweite festgelegte Wasserstand unter dem ersten festgelegten Wasserstand liegt und so ausgelegt ist, dass in dem Wasserspeicherhohlraum (3) eine für den Betrieb des Heizelements (7) erforderliche Wassermenge verbleibt und ein Teil der Innentrommel (2) in das Wasser eingetaucht ist.

9. Verfahren nach Anspruch 8, das ferner Folgendes umfasst:
Ermitteln, dass der erfasste Wasserstand mindestens dem zweiten festgelegten Wasserstand entspricht, und derartiges Ansteuern des Heizelements (7), dass es das Wasser in dem Wasserspeicherhohlraum (3) einer festgelegten Temperatur entsprechend erhitzt.

10. Speichermedium, auf dem ein Computerprogramm gespeichert ist, das Anweisungen umfasst, die das Wäschebehandlungsgerät nach einem der Ansprüche 1 bis 6 dazu veranlassen, das Verfahren nach einem der Ansprüche 7 bis 9 durchzuführen.

## Revendications

1. Appareil de traitement de linge, comportant :
une cuve extérieure (1) ;
un tambour intérieur sans trou (2) agencé de manière rotative dans la cuve extérieure (1) et configuré pour retenir de l'eau ;
une cavité de stockage d'eau (3) agencée sur la cuve extérieure (1) et configurée pour stocker de l'eau débordant du tambour intérieur (2) ;
un tuyau d'évacuation (4) en communication avec la cavité de stockage d'eau (3) ;
une pompe d'évacuation (5) configurée pour évacuer l'eau dans la cavité de stockage d'eau (3) au travers du tuyau d'évacuation (4) ;
un élément chauffant (7) agencé à l'intérieur de la cavité de stockage d'eau (3), dans lequel une partie du tambour intérieur (2) s'étend jusque dans la cavité de stockage d'eau (3), et l'élément chauffant (7) est configuré pour chauffer le tambour intérieur (2) au moyen de l'eau dans la cavité de stockage d'eau (3), et dans lequel l'élément chauffant (7) est configuré pour chauffer l'eau dans le tambour intérieur (2) par le biais du tambour intérieur (2) ;
un dispositif de détection de niveau d'eau (6) configuré pour détecter un niveau d'eau dans la cavité de stockage d'eau (3) ; et
un dispositif de commande relié à la pompe d'évacuation (5) et au dispositif de détection du niveau d'eau (6), dans lequel le dispositif de commande est configuré pour acquérir le niveau d'eau détecté par le dispositif de détection de niveau d'eau (6), et commander la pompe d'évacuation (5) afin qu'elle s'active en fonction du niveau d'eau détecté, pour empêcher l'eau débordant dans la cavité de stockage d'eau (3) de revenir dans le tambour intérieur (2) ; et **caractérisé par** : un élément à trois voies (8) agencé sur le tuyau d'évacuation (4), dans lequel l'élément à trois voies (8) comporte : un premier orifice (82) et un deuxième orifice (83), dans lequel chacun des premier orifice (82) et deuxième orifice (83) est raccordé à une interface respective du tuyau d'évacuation (4) pour raccorder l'élément à trois voies (8) au tuyau d'évacuation (4) ; et
un troisième orifice (84) en communication avec une chambre de la cuve extérieure (1) ou avec la pression atmosphérique extérieure et configuré pour éliminer une différence de pression d'air du tuyau d'évacuation (4) au niveau de l'élément à trois voies (8).

2. Appareil de traitement de linge selon la revendication 1, dans lequel l'élément à trois voies (8) comporte par ailleurs :
un clapet de non-retour (86) agencé au niveau du troisième orifice (84), dans lequel le clapet de non-retour (86) est configuré pour permettre à l'air d'entrer dans le tuyau d'évacuation (4) de manière unidirectionnelle, et pour empêcher de l'eau dans le tuyau d'évacuation (4) de déborder de celui-ci.

3. Appareil de traitement de linge selon la revendication 2, dans lequel l'élément à trois voies (8) comporte :
un corps tubulaire, dans lequel une extrémité du corps tubulaire forme le premier orifice (82), une autre extrémité du corps tubulaire forme le deuxième orifice (83), et une partie médiane du corps tubulaire fait saillie pour former le troisième orifice (84) ; et
un couvercle (85) coiffé sur le troisième orifice (84) et doté d'une pluralité de trous d'aération (851),
dans lequel le clapet de non-retour (86) comporte une première feuille (861) et une deuxième feuille (862) serrées entre le couvercle (85) et le troisième orifice (84), une extrémité serrée de la première feuille (861) et une extrémité serrée de la deuxième feuille (862) sont espacées l'une de l'autre et sont agencées en vis-à-vis l'une de l'autre, et une extrémité libre de la première feuille (861) et une extrémité libre de la deuxième feuille (862) s'étendent à proximité l'une de l'autre le long d'une direction s'éloignant du couvercle (85) et viennent buter l'une contre l'autre.

4. Appareil de traitement de linge selon la revendication 1, dans lequel l'élément à trois voies (8) est situé au niveau d'une partie la plus haute du tuyau d'évacuation (4).

5. Appareil de traitement de linge selon la revendication 1, dans lequel
la cavité de stockage d'eau (3) est formée au fond de la cuve extérieure (1).

6. Appareil de traitement de linge selon la revendication 1, dans lequel
le tambour intérieur (2) a un axe de rotation s'étendant le long d'une direction horizontale, et le tambour intérieur (2) forme une extrémité ouverte (21) le long d'une extrémité de l'axe de rotation.

7. Procédé de commande d'un appareil de traitement de linge, appliqué à l'appareil de traitement de linge selon l'une quelconque des revendications 1 à 6, comportant les étapes consistant à :
acquérir (601) le niveau d'eau détecté par le dispositif de détection de niveau d'eau (6) ;
déterminer (602) comme quoi le niveau d'eau détecté est supérieur ou égal à un premier niveau d'eau réglé ; et
commander (603) la pompe d'évacuation (5) pour qu'elle s'active, afin de permettre au niveau d'eau dans la cavité de stockage d'eau (3) d'être inférieur au premier niveau d'eau réglé,
dans lequel le premier niveau d'eau réglé est inférieur à un niveau d'eau auquel l'eau déborde du tambour intérieur (2).

8. Procédé selon la revendication 7, comportant par ailleurs les étapes consistant à :
déterminer comme quoi l'appareil de traitement de linge a besoin d'effectuer une opération de lavage et de chauffage ; et
commander la pompe d'évacuation (5) pour qu'elle fonctionne pendant une durée déterminée, afin que le niveau d'eau dans la cavité de stockage d'eau (3) puisse être inférieur au premier niveau d'eau réglé et supérieur ou égal à un deuxième niveau d'eau réglé,
dans lequel le deuxième niveau d'eau réglé est inférieur au premier niveau d'eau réglé et est configuré pour retenir, dans la cavité de stockage d'eau (3), une quantité d'eau nécessaire au fonctionnement de l'élément chauffant (7), et permettre à une partie du tambour intérieur (2) d'être immergée dans l'eau.

9. Procédé selon la revendication 8, comportant par ailleurs l'étape consistant à :
déterminer comme quoi le niveau d'eau détecté est supérieur ou égal au deuxième niveau d'eau réglé, et commander l'élément chauffant (7) pour chauffer l'eau dans la cavité de stockage d'eau (3) en fonction d'une température réglée.

10. Support de stockage sur lequel est stocké un programme informatique comportant des instructions pour amener l'appareil de traitement de linge selon l'une quelconque des revendications 1 à 6 à exécuter le procédé selon l'une quelconque des revendications 7 à 9.
